(19) Europäisches Patentamt
European Patent Office
Office européen des brevets

(11) Numéro de publication: **0 098 764**
**B1**

(12) # FASCICULE DE BREVET EUROPEEN

(45) Date de publication du fascicule du brevet: **30.04.86**

(21) Numéro de dépôt: **83401202.3**

(22) Date de dépôt: **10.06.83**

(51) Int. Cl.⁴: **B 01 J 35/10**, B 01 J 35/02, B 01 J 37/10, B 01 J 21/04, C 10 G 45/04

(54) **Catalyseur supporté présentant une résistance accrue aux poisons et son utilisation en particulier pour l'hydrotraitement de fractions pétrolières contenant des métaux.**

(30) Priorité: **17.06.82 FR 8210757**

(43) Date de publication de la demande: **18.01.84 Bulletin 84/3**

(45) Mention de la délivrance du brevet: **30.04.86 Bulletin 86/18**

(84) Etats contractants désignés: **BE DE GB IT NL SE**

(56) Documents cités:
**EP-A-0 015 801**
**EP-A-0 055 164**
**FR-A-1 222 830**
**FR-A-2 486 094**
**US-A-2 651 617**
**US-A-3 630 888**
**US-A-3 997 476**
**US-A-4 225 421**
**US-A-4 257 922**

(73) Titulaire: **Société Française des Produits pour Catalyse "PRO-CATALYSE", 1-4, avenue de Bois Préau, F-92500 Rueil-Malmaison (FR)**

(72) Inventeur: **Toulhoat, Hervé, 8, rue de Seine, F-78230 Le Pecq (FR)**
Inventeur: **Jacquin, Yves, 36, rue des Fontaines, F-92310 Sèvres (FR)**
Inventeur: **Dupin, Thierry, 7, rue Robert de Luzarches, F-95140 Garges-lès-Gonesse (FR)**

EP 0 098 764 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER. STOCKHOLM 1986

## Description

La présente invention concerne un nouveau type de catalyseur supporté caractérisé par une structure particulière qui lui confère un pouvoir de rétention exceptionnellement accru par rapport à un catalyseur de l'art antérieur. Le pouvoir de rétention d'un catalyseur est ici défini comme la quantité maximale de dépots solides dans son volume poreux, exprimée en grammes pour 100 grammes de catalyseur frais, que ce catalyseur peut tolérer sans que son activité tombe au-dessous de par exemple 20% de la valeur initiale. La définition de l'activité du catalyseur dépend de la réaction chimique considérée. Les dépots solides mentionnés sont ceux qui apparaissent lorsque parmi les réactifs présents dans la charge mise au contact du catalyseur, certains se transforment au contact des sites actifs du catalyseur pour donner des produits solides qui précipitent sur place et dont l'accumulation au cours du temps conduit au bouchage des pores. Cette accumulation a pour conséquence l'empoisonnement des sites catalytiques initialement présents et l'apparition d'obstacles à la libre circulation des réactifs et des produits dans les pores.

Par exemple, ces dépots se produisent lors des réactions d'hydrotraitement de fractions pétrolières contenant des complexes organo-métalliques: l'homme de l'art sait qu'en présence d'hydrogène, d'hydrogène sulfuré, et d'un catalyseur d'hydrotraitement, la plupart de ces complexes se détruisent et que leur métal constitutif précipite sous forme d'un solfure solide qui vient se fixer sur la surface interne des pores. C'est en particulier le cas des complexes du nickel, du vanadium, du fer et du cuivre qui sont naturellement présents dans les pétroles bruts en plus ou moins grande abondance suivant l'origine du pétrole, et qui, lors des opérations de distillation ont tendance à se concentrer dans les fractions à point d'ébullition élevé et en particulier dans les résidus. C'est aussi le cas des liquéfiats de charbon qui renferment des métaux, en particulier du fer et du titane. Le terme général hydrodémétallation est utilisé pour désigner ces réactions de destruction des complexes organom-métalliques dans les hydrocarbures.

L'accumulation des dépots solides dans les pores du catalyseur peut se poursuivre jusqu'au bouchage complet d'une partie des pores commandant l'accès des réactifs à une fraction du réseau poreux interconnecté de telle sorte que cette fraction devient inactive alors même que les pores de cette fraction sont seulement faiblement encombrés ou même intacts. Ce phénomène peut donc provoquer une désactivation prématurée et très importante du catalyseur. Il est particulièrement sensible dans le cas des réactions d'hydrodémétallation en présence d'un catalyseur hétérogène supporté. Par hétérogène, on entend non soluble dans la charge d'hydrocarbures. On constate en effet dans ce cas que les pores de la périphérie s'obstruent plus vite que les pores centraux. De même, les bouches des pores s'obstruent plus vite que leurs autres parties. L'obstruction des pores va de pair avec une réduction progressive de leur diamètre, ce qui entraine une limitation accrue de la diffusion des molécules et une accentuation du gradient de concentration, donc une accentuation de l'hétérogènéité du dépot depuis la périphérie vers l'intérieur des particules poreuses au point que l'obstruction complète des pores débouchant à l'extérieur se produit très rapidement: l'accès à la porosité interne presque intacte des particules est alors fermé aux réactifs et le catalyseur est prématurément désactivé.

Le phénomène qui vient d'être décrit est bien connu sous le nom de "colmatage aux bouches des pores". Les preuves de son existence et l'analyse de ses causes ont été publiées à plusieurs reprises dans la littérature scientifique internationale, par exemple: "Catalyst deactivation through pore mouth plugging" présenté au 5 ème symposium international sur le génie de la réaction chimique à Houston, Texas, U.S.A. en mars 1978, ou encore "Effects of feed metals on catalyst aging in hydroprocessing residuum" dans Industrial Engineering Chemistry Process Design and Development, volume 20, pages 262 à 273 publié en 1981 par l'American Chemical Society, ou encore plus récemment dans "Effect of catalyst pore structure on hydrotreating of heavy oil" présenté au congrès national de l'American Chemical Society à Las Vegas, U.S.A., le 30 mars 1982.

Pour améliorer l'efficacité et la durée de vie des catalyseurs soumis au phénomène d'empoisonnement par colmatage des bouches de pores, des supports de catalyseurs bimodaux ont été proposés. Un support de catalyseur bimodal est par définition un solide poreux dont la porosité est distribuée en deux types de pores de diamètres moyens très différents, soit une famille de macropores et une famille de micropores interconnectées. Les micropores ont un diamètre moyen voisin de celui d'un support de catalyseur monomodal classique, soit 3 à 10 nanomètres par exemple et leur fonction est de développer une grande surface spécifique qui multiplie les chances de contact entre les molécules réactives et les sites catalytiques gue l'on détermine sur cette surface. Les macropores ont un diamètre moyen entre par exemple 100 et 1000 fois le diamètre moyen des micropores, et leur fonction est de favoriser l'irrigation de l'ensemble du réseau poreux des particules de catalyseur par les molécules réactives. Pour ces dernières les vitesses de diffusion dans les macropores sont plus élevées et donc la présence de macropores permet une meilleure homogénéisation de leur concentration dans la porosité. En conséquence les dépots solides se répartissent aussi de façon plus homogène dans la porosité et il peut s'en accumuler une plus grande quantité dans le volume poreux catalytique avant que le colmatage des pores situés à la périphérie des particules ne provoque la désactivation complète. On voit donc que la présence de macropores dans un support de catalyseur permet d'augmenter sa durée de vie lorsque celui-ci est soumis au phénomène d'empoisonnement par colmatage des bouches de pores.

Des catalyseurs bimodaux sont décrits par exemple, dans les brevets français numéros 1 592 580, 2 234 184 et 2 285 177, et les brevets américains numéros 4 115 248, 4 225 421 et 4 257 922.

**Objet de l'invention**

La présente invention concerne un nouveau type de catalyseur présentant un pouvoir de rétention concidérablement accru par rapport à celui des catalyseurs connus. L'invention concerne également l'utilisation de ces catalyseurs notamment dans les réactions d'hydrotraitement des fractions hydrocarbonées, en particulier l'hydrogénation, l'hydrodémétallation, l'hydrodésulfuration, l'hydrodéazotation et l'hydrodésoxygénation.

**Description de l'invention**

Le catalyseur poreux de l'invention comprend un support et au moins un métal catalytique ou composé de métal catalytique, ledit métal étant le vanadium, le molybdéne, le tungstène, le nickel, le cobalt et/ou le fer: il est caractérisé par la juxtaposition d'une pluralité d'unités élémentaires, appelées agglomérats, chaque agglomérat étant lui-même formé d'une pluralité de plaquettes aciculaires, généralement orientées les unes par rapport aux autres comme les rayons d'une sphère dont le centre coïnciderait avec celui des agglomérats. En règle générale une large proportion, le plus souvent au moins 50% des plaquettes aciculaires, ont une dimension suivant leur axe de plus grand développment comprise entre 0,05 et 5 micromètres et de préférence entre 0,1 et 2 micromètres, un rapport de cette dimension à leur largeur moyenne compris entre 2 et 20, et de préférence entre 5 et 15, un rapport de cette dimension à leur épaisseur moyenne compris entre 1 et 5000, et de préférence entre 10 et 200. Une large proportion, le plus souvent au moins 50% des agglomérats de plaquettes aciculaires constituent une collection de particules pseudo-sphériques de taille moyenne comprise entre 1 et 20 micromètres, de préférence entre 2 et 10 micromètres. Des images très adéquates pour représenter une telle structure sont par exemple un tas de bogues épineuses de chataîgnes, ou encore un tas d'oursins de mer.

Sans vouloir se limiter à une interprétation particulière du mode d'action du catalyseur, on admet que la structure précitée comprend des macropores et des mésopores (par mésopores, on entend les pores de tailles comprises entre celle des micropores et celle des macropores: les mésopores se situent donc, en gros, entre 10 et 100 nanomètres) et pratiquement pas de micropores. L'espace laissé libre entre les agglomérats juxtaposés et dont les parois présentent une surface spécifique très élevée, parcequ'elles sont hérissées de plaquettes aciculaires bien individualisées, représenterait le réseau de macropores interconnectées. Les interstices "en coin" ménagés entre les plaquettes aciculaires constitueraient les pores actifs proprement dits (en l'occurence, essentiellement des mésopores).

Pour une telle structure, la courbe de distribution cumulée de volume poreux en fonction du diamètre de pores obtenue par la technique classique de pénétration de mercure sous pression n'est ni monomodale ni bimodale en ce sens qu'il n'apparait plus de familles de pores distinctes dont les diamètres de pores seraient centrés sur des valeurs moyennes bien définies, mais une répartition relativement continue des pores entre deux valeurs extrêmes de diamètre. Entre ces valeurs extrêmes, il n'y a pas de palier horizontal sur la courbe de répartition poreuse cumulée. La figure 1 permet de comparer la courbe de répartition poreuse d'un catalyseur selon l'invention et celles correspondant à des catalyseurs monomodaux ou bimodaux réalisés selon l'art antérieur.

Le catalyseur selon l'invention a une distribution poreuse caractérisée de préférence comme suit:

– Volume poreux total: 0,7 à 2,0 cm3/g, de préférence 0,90 à 1,30 cm3/g.

– % du volume poreux total en pores de diamètre moyen inférieur à 10 nanomètres: 0-10

– % du volume poreux total en pores de diamètre moyen compris entre 10 et 100 nanomètres: 40-90

– % du volume poreux total en pores de diamètre moyen compris entre 100 et 500 nanomètres: 5-60

– % du volume poreux total en pores de diamètre moyen compris entre 500 et 1000 nanomètres: 5-50

– % du volume poreux total en pores de diamètre moyen supérieur à 1000 nanomètres: 5-20

La surface spécifique de catalyseur selon l'invention est comprise entre 50 et 250 m2/g et de manière particulièrement préférée entre 120 et 180 m2/g

La technique de microscopie électronique à balayage permet de caractériser sans ambiguïté par des microphotographies un catalyseur possédant la structure selon l'invention. Les figures 2 à 5 présentent quatre microphotographies aux grossissements 300 fois, 3000 fois, 10000 fois et 20000 fois respectivement d'un catalyseur selon l'invention (catalyseur A) qui illustrent bien la structure particulière en oursins juxtaposes que l'on vient de décrire.

La figure 6 présente une microphotographie au grossissement nominal 110.000 fois d'un faisceau de plaquettes aciculaires du catalyseur A, qui illustre bien l'allure typique de ces plaquettes. Les intervalles entre les flèches opposées marquées 1 repèrent la trace de plaquettes sur champ et sont une mesure approximative de l'épaisseur de ces plaquettes. L'intervalle entre les flèches opposées marquées 2 repère une plaquette parallèlle au plan de la photographie et est une mesure de la largeur moyenne de cette plaquette. Sur la figure 6, l'échelle est de 9 nanomètres pour un millimètre et les parties foncées correspondent à la matière catalytique.

En revanche, les figures 7 à 10 présentent quatre microphotographies prises aux mêmes grossissements respectifs que les figures 2 à 5 et avec le même appareil, sur un échantillon de catalyseur (catalyseur B) préparé en utilisant des billes d'alumine bimodales obtenues par le procédé breveté en France sous le numéro 2 449 474: ces photographies illustrent bien la description qui est donnée dans ce dernier brevet à savoir que la macroporosité résulte des vides interparticulaires existant entre des particules microporeuses sphéroïdales, dont la répartition granulométrique et la compacité de l'empilement déterminent le volume macroporeux et la taille des macropores. Sur les photographies des figures 2 à 5 et 7 à 10, les plages foncées correspondent aux espaces vides des structures des catalyseurs, c'est à dire à la macroporosité, tandis que les parties claires

correspondent à la matière catalytique. La répartition des diamètres des macropores du catalyseur B peut être mesurée sur les photographies et elle correspond bien à celle que l'on obtient par porosimétrie au mercure et qui est représentée figure 1. La comparaison des microphotographies fait bien apparaître que les particules sphéroïdales microporeuses du catalyseur B n'ont pas la structure en oursin obtenue pour le catalyseur A préparé selon l'invention.

Le brevet américain numéro 3 630 888 décrit un catalyseur d'hydrocraquage et désulfuration des résidus hydrocarbonés comprenant des micropores où se développe la surface catalytique active et des canaux d'accès à ces micropores qui ne développent pas particulièrement de surface active. Ces canaux d'accès se laissent classer en deux groupes distincts, un premier groupe ayant des diamètres de pores supérieurs à 100 nanomètres et comprenant 10 à 40 % du volume poreux total et un second groupe ayant des diamètres de pores compris entre 10 et 100 nanomètres et comprenant de 10 à 40 % du volume poreux total. Une partie de ces canaux d'accès est caractérisée par une disposition rayonnante à partir du centre des agglomérats microporeux, dont l'assemblage constitue la structure catalytique, vers leur surface. Cependant il est expressément indiqué que ces canaux doivent être linéaires et de diamètre quasi-uniforme et par ailleurs ces canaux sont obtenus par l'élimination d'une substance porogène soit explosive, soit constituée de cristaux aciculaires dont on peut favoriser la croissance radiale en même temps qu'un agglomérat est formé. La présente invention est concue de façon très différente et comme les exemples l'illustreront par la suite, les différences suivantes, qui caractérisent plus particulièrement le catalyseur de l'invention, accroissent très notablement sa résistance au colmatage des bouches de pores:

– Les pores présents dans le catalyseur de l'invention, constitués en majorité par le espaces libres situés entre les plaquettes aciculaires rayonnantes, sont des pores "en coins" et donc de diamètre continument variable.

– Ces pores rayonnants ne sont pas nécessairement linéaires en direction.

– Ces pores rayonnants ne sont pas des canaux d'accès à des micropores de diamètres inférieurs à 10 nanomètres mais ils constituent eux mêmes une mésoporosité offrant une surface catalytiquement active.

Les différences invoquées se laissent le mieux résumer par le fait que le catalyseur décrit dans le brevet US 3 630 888 cité en référence comprend dans son volume poreux total au moins 20 % de micropores de diamètre inférieur à 10 nanomètres alors que le catalyseur selon la présente invention en contient au plus 10 %. La structure aciculaire du catalyseur selon l'invention concerne la matière en plaquettes que l'on a décrite, alors que la structure aciculaire du catalyseur décrit dans le brevet américain US 3 630 888 est celle des canaux d'accès inclus dans les agglomérats.

De façon surprenante, la demanderesse a découvert qu'un catalyseur possédant la structure de l'invention résiste bien mieux que les catalyseurs connus jusqu'à présent au phénomène d'empoisonnement par colmatage des bouches de pores. Par exemple dans le cas de l'hydrotraitement d'une huile désasphaltée provenant du désasphaltage de pétrole brut lourd vénézuélien dit BOSCAN, le pouvoir de rétention d'un catalyseur selon l'invention s'est avéré plus de deux fois et demi supérieur à celui d'un catalyseur monomodal microporeux et près de 50 % supérieur à celui d'un catalyseur bimodal macroporeux et microporeux. Les raisons en sont probablement que la forme "en coin" de chaque mésopore compense ou supprime les gradients de concentration en réactifs qui s'établiraient normalement dans un pore cylindrique, phénomène s'ajoutant à une géométrie très favorable pour s'opposer au colmatage des bouches de pores. En outre chaque mésopore ou presque a un accès indépendant des autres à la macroporosité interstiCielle, et au total la structure catalytique selon l'invention favorise au mieux une accumulation homogène des dépots, sans colmatage prématurément désactivant.

Un catalyseur selon l'invention peut être préparé suivant la méthode suivante, sans limiter l'invention à cette méthode particulière de préparation:

On utilise comme support des agglomérés en particules de l'ordre de 0,1 à 10 millimètres ou en poudre en particules de l'ordre de 20 à 100 micromètres ayant eux-mêmes la structure en oursins précitée et répondant sensiblement aux mêmes caractéristiques que celles du catalyseur de l'invention, notamment en ce qui concerne les formes et les dimensions des plaquettes et des agglomérats, la surface spécifique et la porosité.

Sur ces agglomérés on dépose, par toute méthode connue, le ou les métaux catalytiques, à savoir l'un au moins des métaux suivants: molybdène, tungstène, fer, vanadium, cobalt et nickel. Des associations préférées sont molybdène + cobalt, molybdène + nickel, vanadium + nickel, tungstène + nickel.

Les métaux précités sont le plus souvent introduits sous forme de précurseurs tels que oxydes, acides, sels, complexes organiques, et en quantités telles que le catalyseur renferme de 0,5 à 40 % en poids de ces métaux exprimés en oxydes. On termine par un séchage éventuel et un traitement thermique à une température comprise entre 400 et 800 degrés centigrades.

Dans le cas où le catalyseur de l'invention est destiné à être utilisé pour les réactions d'hydrodémétallation des hydrocarbures, la méthode suivante est particulièrement avantageuse pour déposer les métaux catalytiques: soit x la quantité de métaux contenus dans la charge sous forme de composés organométalliques, exprimée en partites par millions en poids. Les agglomérés précités sont disposés dans un réacteur vertical. Ce réacteur peut être l'appareil qui sera ensuite affecté à la réaction d'hydrodémétallation proprement dite. Le réacteur est rempli par la charge d'hydrocarbures à traiter, portée à une température comprise entre environ 50 degrés C et environ 200 degrés C, puis on établit une circulation de préférence ascendante de cette charge avec un débit spécifique (V.V.H.) compris entre environ 0,1 et environ 2, de préférence entre 0,5 et 1 volumes par volume d'alumine et par heure. Les hydrocarbures sortant du réacteur peuvent ou non être recyclés à l'entrée du

réacteur. Ils seront de préférence recyclés. En même temps, on établit dans l'appareillage à cocourant de la charge d'hydrocarbures une circulation d'un gaz contenant au moins 70 % en volumes d'hydrogène et au moins 0,5 % en volumes d'hydrogène sulfuré de telle sorte que le rapport du débit du gaz au bébit du liquide soit compris entre environ 500 et environ 2000 Nm3/m3, de préférence 1000 à 1500 Nm3/m3, tout en maintenant dans le réacteur une pression comprise entre environ 80 et environ 250 bars, de préférence entre 100 et 200 bars. Lorsque les débits de fluides sont stabilisés, la température du réacteur est augmentée jusqu'à une valeur comprise entre 360 et 420 degrés C, et de préférence comprise entre 380 et 410 degrés C, la vitesse d'augmentation de la température étant maintenue inférieure à 20 degrés C par heure. A partir du moment où la température moyenne dans le réacteur a atteint la valeur choisie entre 360 et 420 degrés C, la circulation des fluides est maintenue pendant une période égale au moins à 50000/x/V.V.H. heures. La quantiteté x de métaux contenus sous formes de composés organo-métalliques dans la charge d'hydrocarbures utilisée pour cette méthode particulière de dépot des métaux catalytiques sur le catalyseur de l'invention peut être artificiellement augmentée par l'introduction dans cette charge de tout complexe soluble dans cette charge somme par exemple une solution alcoolique de bleu de molybdène, l'octoate de molybdène, le naphténate de molybdène, le résinate de molybdène, le résinate de vanadium, les acétyl-acétonates de nickel, vanadium ou molybdène, cette liste n'étant pas exhaustive. La durée de préparation du catalyseur peut dans ce cas être sensiblement diminuée puisque selon la formule citée plus haut elle est inversement proportionnelle à la valeur de x.

Le support dont l'emploi est un élément essentiel de l'invention peut être de l'alumine, de la silice, de la silice-alumine, un silico-aluminate naturel ou synthétique, par exemple une argile, ou du carbone. On préfère l'alumine et plus particulièrement une alumine renfermant de 100 à 1000 parties par million en poids de silice. Dans ce dernier cas il est obtenu de préférence par la méthode suivante, décrite dans la demande europénne EP-a 55164 de la demanderesse, qui luit partie de l'état de la technique au sens de l'article 54(3)CBE:

a) – On traite des agglomérés d'alumine active dans un milieu aqueux constitué d'un mélange d'au moins un acide permettant de dissoudre au moins une partie de l'alumine des agglomérés et d'au moins un composé apportant un anion capable de se combiner avec les ions aluminium en solution, ce dernier composé étant un individu chimique distinct de l'acide précité.

b) – On soument simultanément ou subséquemment les agglomérés ainsi traités à un traitement à une température comprise entre environ 80 degrés C et environ 250 degrés C pendant une période comprise entre environ quelques minutes et environ 36 heures.

c) – On sèche éventuellement les agglomérés et on les soumet à une activation thermique à une température comprise entre environ 500 degrés C et environ 1100 degrés C.

Les agglomérés d'alumine active mis en oeuvre selon la présente invention sont préparés à partir d'une poudre d'alumine active présentant une structure mal cristallisée et/ou amorphe par exemple obtenue selon le procédé tel que décrit dans le brevet français numéro 1 438 497. Ce procédé consiste à humecter à l'aide d'une solution aqueuse l'alumine active présentant une structure mal cristallisée et/ou amorphe, à l'aggleomérer, à faire mûrir les agglomérés obtenus en atmosphère humide à température peu élevée, de préférence comprise entre environ 60 et environ 100 degrés C, à sécher puis à calciner ces agglomérés à une température comprise entre environ 250 degrés C et environ 900 degrés C.

Au sens de ce procédé, on entend par alumine de structure mal cristallisée, une alumine telle que l'analyse aux rayons X donne un diagramme ne présentant qu'une ou quelques raies diffuses correspondant aux phases cristallines des alumines de transition basse température et comportant essentiellement les phases chi, rho, êta, gamma, pseudogamma et leurs mélanges.

On entend par alumine de structure amorphe, une alumine telle que son analyse aux rayons X ne décèle aucune raie caractéristique d'une phase cristalline quelconque.

L'alumine active mise en oeuvre est généralement obtenue par déshydratation rapide des hydroxydes d'aluminium tels que la bayerite, l'hydrargillite ou gibbsite, la nordstrandite ou les oxyhydroxydes d'aluminium tels que la boehmite et le diaspore. Cette déshydratation peut être opérée dans n'importe quel appareillage approprié à l'aide d'un courant de gaz chaud. La température d'entrée des gaz dans l'appareillage varie généralement de 400 degrés C à 1200 degrés C environ et le temps de contact de l'hydroxyde ou de l'oxyhydroxyde avec les gaz chauds est généralement compris entre une fraction de seconde et 4 à 5 secondes.

La surface spécifique mesurée par la méthode BET de l'alumine active obtenue par déshydration rapide d'hydroxydes ou d'oxyhydroxydes varie généralement entre environ 50 et 400 m2/g, le diamétre des particules est généralement compris entre 0,1 et 300 micrométres et de préférence entre 1 et 120 mocrométres. La perte au feu mesurée par calcination à 1000 degrés C varie généralement entre 3 et 15 %, ce qui correspond à und rapport molaire H20/A1203 compris entre environ 0.17 et 0,85.

Selon un mode de mise en oeuvre particulier on utilise de préférence une alumine active provenant de la déshydration rapide de l'hydrate Bayer (hydrargillite) qui est l'hydroxyde d'aluminium industriel facilement accessible et très bon marché; une telle alumine acitve est bien connue de l'homme de l'art, son procédé de préparation a notamment été décrit dans la brevet français numéro 1 108 011.

L'alumine active mise en oeuvre peut être utilisée telle quelle ou après avoir été traitée de façon à ce que sa teneur en soude exprimée en Na20 soit inférieure à 1000 ppm. L'alumine active mise en oeuvre peut avoir été broyée ou non.

L'agglomération de l'alumine active est réalisée selon les méthodes bien connues de l'homme de l'art et, en particulier, par pastillage, extrusion, mise en forme de billes au drageoir tournant, etc...

D'une manière préférée, cette agglomération est effectuée, ainsi qu'il est bien connu de l'homme de l'art, en ajoutant des agents porogènes au mélange à agglomérer. Les agents porogènes que l'on peut utiliser sont notamment la farine de bois, le charbon de boi, la cellulose, les amidons, la naphtaline et, d'une manière générale tous les composés organiques susceptibles d'être éliminés par calcination.

On opère ensuite, le cas échéant, le mûrissement, le séchage et/ou la calcination des agglomérés.

Les agglomérés d'alumine active mis en oeuvre selon le procédé de l'invention présentent généralement les caractéristiques suivantes: leur perte au feu mesurée par calcination à 1000 degrés C est comprise entre environ 1 et environ 15 % leur surface spécifique est comprise entre environ 100 et environ 350 m2/g, leur volume poreux total est compris entre environ 0,45 et environ 1,5 $cm^3/g$.

Les agglomérés d'alumine active sont traités selon l'invention dans un milieu aqueux constitué j'un mélange d'au moins un acide permettant de dissoudre au moins une partie de l'alumine des agglomérés et d'au moins un composé apportant un anion capable de se combiner avec les ions aluminium en solution.

Au sens de l'invetion, on entend par acide permettant de dissoudre au moins une partie de l'alumine des agglomérés tout acide qui, mis en contact avec les agglomérés d'alumine active définis ci-dessus, réalise la mise en solution d'au moins une partie des ions aluminium. L'acide doit dissoudre au moins 0,5 % et au plus 15 % en poids d'alumine des agglomérés. Sa concentration dans le milieu aqueux de traitement doit être inférieure à 20 % en poids et de préférence comprise entre 1 % et 15 %.

On utilisera de préférence les acides forts tels que l'acide nitrique, l'acide chlorhydrique, l'acide perchlorique, l'acide sulfurique ou des acides faibles mis en oeuvre à une concentration telle que leur solution aqueuse présente un pH inférieur à environ 4.

Au sens de l'invention, on entend par composé apportant un anion capable de se combiner avec les ions aluminium en solution, tout composé capable de libérer en solution un anion A(-n) susceptible de former avec les cations A1(3+) des produits dans lesquels le rapport atomique n(A/A1) est inférieur ou égal à 3. Un cas particulier de ces composés peut être illustré par les sels basiques de formule générale A12(OH)×Ay dans laquelle $0 < x < 6$ ; $ny < 6$ ; n représente le nombre de charges de l'anion A.

La concentration de ce composé dans le milieu aqueux de traitement doit être inférieure à 50 % en poids et de préférence comprise entre 3 % et 30 %.

On utilise de préférence les composés capables de libérer en solution les anions choisis parmi le groupe constitué par les anions, nitrate, chlorure, sulfate, perchlorate, chloroacétate, dichloracétate, trichloracétate, bromoacétate, dibromacétate, et les anions de formule générale:

$$R{-}{-}\overset{\overset{O}{\|}}{C}{-}{-}O(-)$$

dans laquelle R représente un radical pris dans le groupe comprenant H, $CH_3$, $C_2H_5$, $CH_3CH_2CH_2$, $(CH_3)_2CH$.

Les composés capables de libérer en solution l'anion A(-n) peuvent opérer cette libération, soit directement par exemple par dissociation, soit indirectement par exemple par hydrolyse. Les composés peuvent notamment être choisis parmi le groupe comportant: les acides minéraux ou organiques, les anhydrides, les sels organiques ou minéraux, les esters. Parmi les sels minéraux on peut citer les sels alcalins ou alcalino-terreux solubles en milieu aquaux, comme ceux de sodium, de potassium, de magnésium ou de calcium, les sels d'ammonium, les sels d'aluminium, les sels de terres rares.

Ce premier traitement peut être effectué soit par imprégnation à sex des agglomérés, soit par immersion des agglomérés dans la solution aqueuse constituée du mélange selon l'invention. Par imprégnation à sec on entend mise en contac des agglomérés d'alumine avec un volume de solution inférieur ou égal au volume poreux total des agglomérés traités.

Selon un mode particuliérement préféré de mise en oeuvre de l'invention, on utilisera comme milieu aqueux des mélanges d'acide nitrique et acétique ou d'acide nitrique et formique.

On soument simultanément ou subséquemment les agglomérés ainsi traités à un traitement à une température comprise entre environ 80 et environ 250 degrés C pendant une période de temps comprise entre environ 5 minutes et environ 36 heures.

Ce traitement hydrothermique n'entraîne aucune perte d'alumine.

On opère de préférence à une température comprise entre 120 et 220 degrés C pendant une période de temps comprise entre 15 minutes et 18 heures.

Ce traitement constitue un traitement hydrothermal des agglomérés d'alumine active qui réalise la transformation d'au moins une partie de ceux-ci en boehmite. Ce traitement hydrothermal peut être réalisé soit sous pression de vapeur saturante, soit sous une pression partielle de vapeur d'eau au moins égale à 70 % de la pression de vapeur saturante correspondant à la température de traitement.

Sans limiter la présente invention à la théorie, on peut penser que l'association d'un acide qui permet la dissolution d'au moins une partie de l'alumine et d'un anion qui permet la formation des produits décrits ci-dessus lors du traitement hydrothermal entraîne l'obtention d'une boehmite particuliére, précurseur des plaquettes aciculaires de l'invention, dont la croissance procède radialement à partir de germes de cristallisation.

De plus, la concentration de l'acide et du composé dans le mélange de traitement et les conditions de traitement hydrothermal mises en oeuvre sont telles qu'il n'y a pas de perte d'alumine. L'augmentation de la porosité à la suite du traitement est donc due à une expansion des agglomérés au cours du traitement et non à une perte d'alumine.

Les agglomérés ainsi traités sont ensuite éventuellement séchés à une température généralement comprise entre environ 100 et 200 degrés C pendant une période de temps suffisante pour enlever l'eau qui n'est pas chimiquement liée. Les agglomérés sont ensuite soumis à une activation thermique à une température comprise entre environ 500 degrés C et environ 1100 degrés C pendant une période comprise entre environ 15 minutes et 24

heures.

Les opérations d'activation peuvent se faire en plusieurs étapes. On opèrera de préférence une activation à une température comprise entre environ 550 degrés C et 950 degrés C.

Les agglomérés d'alumine active résultants présentent les caractéristiques suivantes:

Une densité de remplissage tassé comprise entre environ 0,36 et 0,75 g/$cm^3$.

Un volume poreux total (VPT) compris entre 0,7 et environ 2,0 $cm^3$/g.

Une répartition des volumes poreux suivant la taille des pores conforme aux valeurs énoncées plus haut, concernant le catalyseur de l'invention, au facteur correctif près traduisant l'alourdissement dû au dépot des métaux.

Une surface spécifique mesurée par la méthode B.E.T. comprise entre environ 80 et environ 250 $m^2$/g.

Une solidité mécanique comprise entre 2 et environ 20 kg, mesurée par la méthode d'écrasement grain par grain.

Le procédé précité de préparation d'agglomérés d'alumine permet notamment et de façon totalement inattendue de modifier la répartition des volumes poreux suivant la taille des pores des agglomérés non traités. Il permet notamment d'augmenter la proportion des pores compris entre 10 et 100 nanomètres, de réduire la proportion des pores inférieurs à 10 nanomètres et de diminuer la proportion des pores supérieur à 10 nanomètres et de diminuer la proportion des pores supérieurs à 500 nanomètres en modifiant peu la proportion des pores compris entre 100 et 500 nanomètres.

Les agglomérés d'alumine ainsi obtenus peuvent avoir été thermiquement stabilisés par les terres rares, la silice ou les métaux alcalino-terreux ainsi qu'il est bien connu de l'homme de l'art. En particulier, ils peuvent être stabilisés selon le procédé décrit dans le brevet américain numéro 4 061 594.

Les catalyseurs de l'invention peuvent ainsi, notamment, être utilisés dans tous les hydrotraitements comme l'hydrodésulfuration, l'hydrodémétallation, l'hydrodéazotation, l'hydrofinissage d'huiles, l'hydrocraquage, l'hydrogénation, la déshydrogénation et la déshydrocyclisation d'hydrocarbures.

Ces hydrotraitements peuvent être appliqués par example aux fractions pétrolières telles que les pétroles bruts de degré API inférieur à 20, les extraits de sables bitumineux et de schistes bitumineux, les résidus atmosphériques, les résidus sous vide, les asphaltes, les huiles désasphaltées, les résidus sous vide désasphaltés, les bruts désasphaltés, les fuels lourds, les distillats atmosphériques et les distillats sous vide, ou encore à d'autres hydrocarbures tels que les liquéfiats du charbon. Les hydrotraitements destinés à éliminer les impuretés telles que le soufre, l'azote, les métaux, et à abaisser le point d'ébullition moyen de ces hydrocarbures sont habituellement mis en oeuvre à une température d'environ 370 à 470 degrés C, sous une pression partielle d'hydrogène d'environ 50 à 300 bars, à une vitesse spatiale d'environ 0,3 à environ 5 volumes par volume de catalyseur et par heure, le rapport hydrogène gazeux sur charge liquide d'hydrocarbures étant de 200 à 5000 normaux mètres cubes par mètre cube.

Les examples donnés ci-aprés illustrent l'invention sans en limiter la portée.

**Exemple 1**

On traite 4 kg de billes d'alumine obtenues selon le procédé décrit dans le brevet français numéro 1 438 497 dans un réacteur de dix litres. Ces billes présentent les caractéristiques suivantes:

Surface spécifique: 192 $m^2$/g

Volume poreux total: 0,84 $cm^3$/g

Volume des pores de diamètre moyen inférieur à 10 nanomètres: 0,06 $cm^3$/g

Volume des pores de diamètre moyen compris entre 10 et 100 nanomètres: 0,40 $cm^3$/g

Volume des pores de diamètre moyen compris entre 100 et 500 nanomètres: 0,10 $cm^3$/g

Volume des pores de diamètre moyen compris entre 500 et 1000 nanomètres: 0,10 $cm^3$/g

Volume des pores de diamètre moyen supérieur à 1000 nanomètres: 0,18 $cm^3$/g

Le traitement est effectué en phase vapeur à une température de 195 degrés C pendant un temps de 3 heures. Le milieu de traitement est constitué par un mélange d'acide nitrique de concentration 7 g pour 100 g A1203 et d'acide acétique de concentration 10 g pour 100 g A1203. L'acide nitrique permet de dissoudre environ 2,5% en poids des billes d'alumine. L'acide acétique apporte l'anion acétate qui se combine avec les ions aluminium en solution pour former des composés dans lesquels le rapport atomique $CH_3COOH$/A1 sera inférieur à 3. Les billes ainsi traitées sont activées thermiquement à 900 degrés C pendant deux heures dans un four. Elles présentent alors les caractéristiques suivantes:

Densité de remplissage tassé: 0,46 g/$cm^3$

Granulométrie: 2 à 4 mm

Volume poreux total: 1,10 $cm^3$/g

Surface spécifique: 115 $m^2$/g

Volume des pores de diamètre moyen inférieur à 10 nanomètres: 0,03 $cm^3$/g

Volume des pores de diamètre moyen compris entre 10 et 100 nanomètres: 0,72 $cm^3$/g

Volume des pores de diamètre moyen compris entre 100 et 500 nanomètres: 0,15 $cm^3$/g

Volume de pores de diamètre moyen compris entre 500 et 1000 nanomètres: 0,12 $cm^3$/g

Volume des pores de diamètre moyen supérieur à 1000 nanomètres: 0,08 $cm^3$/g

On voit donc que le traitement a permis d'éliminer presque entièrement les pores de diamètre moyen inférieur à 10 nanomètres, d'augmentar la quantité des pores de diamètre moyen compris entre 10 et 100 nanomètres, et de diminuer la quantité de pores de diamètre moyen supérieur à 1000 nanomètres.

375,3 g d'heptamolybdate d'ammonium quadrihydrate sont pesés exactement, puis mis en solution dans 1500 $cm^3$ d'eau distillée dans un réacteur agité chauffé à 60 degés C. Séparément, 254, 6 g de nitrate de nickel hexahydrate sont pesés exactement puis dissous à température ambiante dans un réacteur agité contenant 1500 $cm^3$ d'eau distillée. Les deux solutions ainsi préparées sont ensuite mélangées, et le

volume total de mélange est porté à 4200 $cm^3$ exactement par addition d'eau distillée. La température de ce mélange constituant la solution d'imprégnation est ajustée à 25 degrés C puis, sans attendre, ce mélange est mis au contact des 4 kg de billes d'alumine préparées auparavant par la technique d'imprégnation à sec bien connue de l'homme de l'art. Les billes imprégnées sont ensuite maintenues pendant 12 heures en atmosphère confinée, saturée de vapeur d'eau, puis séchées par un courant d'air sec à 100 degrés C. Les billes séchées sont ensuite calcinées dans un four rotatif chauffée directement par une flamme de combustion d'abord deux heures à 350 degrés C puis deux heures à 500 degrés C, cette dernière calcination constituant l'opération finale dans la préparation du catalyseur.

Il sera par la suite fait référence sous le nom de catalyseur A au catalyseur ainsi préparé.

L'analyse chimique du catalyseur A a donné la composition suivante, exprimée en % poids:

A1203: 91,5 %
Mo03: 7,0 %
Ni0: 1,5 %

Les figures 2 à 5 présentent des microphotographies du catalyseur A effectuées au moyen d'un microscope électronique à balayage de marque JEOL, modèle JSM 35 CF, aux grandissements respectifs 300, 3000, 10000 et 20000. Les échelles indiquées sur chaque photographie permettent de mesurer les dimensions des détails observables. Les parties sombres correspondent à la porosité, tandis que les parties claires correspondent à la matière catalytique. On peut voir que le catalyseur A possède bien la structure "en oursins" selon l'invention, à savoir une juxtaposition d'agglomérats ayant en majorité une dimension moyenne de 3,5 micromètres, chaque agglomérat étant formé de plaquettes allongées aciculaires, assemblées généralement radialement par rapport au centre des agglomérats. Les dimensions des plaquettes aciculaires sont mesurables en particulier sur la figure 6, qui est une microphotographie prise au grossissement nominal 110.000 avec un microscope électronique à transmission à balayage (S.T.E.M. VG HB 5). Les plages sombres correspondent cette fois à la matière catalytique. L'échelle de cette microphotographie est de 9 nanomètres pour un millimètre. Les intervalles délimités par des flèches opposées repérées 1 et 2 correspondent respectivement aux traces de plaquettes aciculaires disposées perpendiculairement et parallèlement au plan de l'image. Les intervalles 1 donnent donc une mesure approximative de l'épaisseur des plaquettes et l'intervalle 2 une mesure de largeur de plaquette, soit respectivement environ 2 à 4 nanomètres et 60 nanomètres. Suivant leur axe de plus grand développement, les plaquettes de la figure 6 ont une lonqueur de l'ordre de 0,5 à 1 micromètre, ce qui est en accord avec les longueurs mesurables sur la figure 5 où l'on voit ces plaquettes disposées dans les agglomérats. Le rapport de la longueur moyenne à la larqeur moyenne est donc d'environ 8 à 16 et le rapport de la longueur moyenne à l'épaisseur moyenne est d'environ 120 à 480.

La figure i présente notamment la courbe de répartition poreuse cumulée du catalvseur A. Le diamètre des pores (D). exprimé en nanomètres, figure en abcisses et le volume poreux cumblé (V), exprimé en $cm^3/g$, en ordonnées. On peut constater que la répartition est conforme à la définition de l'invention et en particulier qu'elle ne possède pas de point d'inflexion intermédiaire bien marqué.

1000 $cm^3$ de catalyseur A ont été mis en oeuvre en lit fixe à courant ascendant dans le réacteur d'une unité pilote d'hydrotraitment, dans des conditions opératoires indiquées au tableau 1, pour traiter une charge d'huile désasphaltée extraite de pétrole brut vénézuélien Boscan, et dont les caractéristiques sont indiquées au tableau 2.

Dans ces conditions, l'essai a duré 2350 heures et a dû être arrêté pour des raisons indépendantes du catalyseur. L'activité résiduelle de démétallation avant arrêt était supérieure à 50% de l'activité initiale. La perte de charge à travers le réacteur est restée inférieure à 10 bars pendant toute la durée de l'essai. Après rinçage dans les conditions du test par une charge de gas-oil de distillation directe, puis sechage par un courant d'hydrogène chaud, le catalyseur a été déchargé du réacteur par gravité: aucun dépot colmatant ou agglomérat de grain de catalyseur ne s'est présenté au déchargement, les billes de catalyseur usagé restant bien individualisées et aussi facilement manipulables que le catalyseur neuf.

L'analyse chimique du catalyseur usagé a fourni pour la somme du nickel et du vanadium captés au cours de l'essai la valeur movenne de 130 grammes par 100 grammes de catalyseur frais. Le pouvoir de retention tel que défini plus haut est donc supérieur à cette valeur pour le catalyseur A utilisé dans ces conditions.

Les performances moyennes enregistrés pour l'ensemble de l'essai se résument de la façon suivante:

Hydrodésulfuration (HDS): 50 %
Hydrodémétallation (HDM): 85 %

**Exemples 2 à 5**

On a répété l'exemple 1 en remplaçant dans la fabrication du support d'alumine, les 7 g d'acide nitrique et les 10 g d'acide acétique pour 100 g d'alumine respectivement par:

a) 7 g d'acide nitrique et 6 g d'acide formique.
b) 15 g d'acide acétique et 12 g de sulfate d'ammonium.
c) 4 gg d'acide chlorhydrique et 5 g d'anhydride acétique.
d) 7 g d'acide nitrique et 6 g d'acétate d'éthyle.

Les catalyseurs obtenus avaient sensiblement la même structure selon l'invention, la même courbe de répartition poreuse, et les performances dans le même test d'hydrotraitement ont été sensiblement les mêmes que celles du catalyseur de l'exemple 1.

Pression totale: 100 bars
Vitesse spatiale: 1 1/1/h
Température: 380 à 410 degrés C
Rapport H2/charge: 1000 $Nm3/m^3$
Présulfuration du catalyseur par un mélange gazeux hydrogène + 3% en volume d'hydrogène sulfuré, à 350 deg C pendant 6 heures, à 1 atmosphère.

Conditions opératoires pour le test d'hydrotraitement de l'exemple 1

**Tableau 1**

Densité à 20 degrés C: 0,989 g/$cm^3$
Viscosité à 100 degrés C: 161 mm2/s
Viscosité à 150 degrés C: 25,3 mm2/s
Carbone Conradson: 10,3 % poids
Insolubles au n-heptane: 0,17 % poids
Insolubles au n-pentane: 1,7 % poids
Soufre total: 5,16 % poids
Azote total: 3990 ppm
Nickel: 47 ppm
Vanadium: 400 ppm
Distillation ASTM D 1160
Point initial: 240 deg C
Point 50 %: 550 deg C

Caractéristiques de la charge d'huile désasphaltée (DAO) extraite de brut de Boscan désessencié utilisée pour le test d'hydrotraitement decrit à l'exemple 1

**Tableau 2**

**Exemple 6**

On prépare 4 kg de billes d'alumine à double porosité suivant le mode opératoire décrit dans l'exemple 1 du brevet français numéro 2 449 474, en mélangeant le sol de boehmite avec 76 % de particules sphéroïdales à pH=7. Ces billes sont ensuite imprégées à sec suivant le mode opératoire de l'exemple 1, pour donner un catalyseur de même composition pondérale que le catalyseur A. On fera par la suite référence à ce catalyseur sous le nom de catalyseur B.

Les caracteristiques du catalyseur B sont les suivantes:

Surface spécifique: 110 $m^2$/g
Granulométrie: 2 à 4 mm
Volume poreux total: 1,08 $cm^3$/g
Densité tassée: 0,45 g/$cm^3$
Volume des pores de diamètre moyen inférieur à 10 nanomètres: 0,03 $cm^3$/g
Volume des pores de diamètre moyen compris entre 10 et 100 nanomètres: 0,60 $cm^3$/g
Volume des pores de diamètre moyen compris entre 100 et 500 nanomètres: 0,08 $cm^3$/g
Volume des pores de diamètre moyen compris entre 500 et 1000 nanomètres: 0,07 $cm^3$/g
Volume des pores de diamètre moyen supérieur à 1000 nanomètres: 0,30 $cm^3$/g

La courbe de répartition poreuse cumulée du catalyseur B est représentée sur la figure 1 et peut être comparée à celle du catalyseur A. Les deux courbes se ressemblent beaucoup et en particulier sont superposables dans la gamme des diamètres de pores compris entre 13 nanomètres et 50 nanomètres. Elles diffèrent par le volume des pores de diamètre supérieur à 100 nanomètres.

Les figures 7 à 10 présentent des microphotographies effectuées sur le catalyseur B dans les mêmes conditions que les microphotographies du catalyseur A de l'exemple 1. On voit sur ces microphotographies que la catalyseur B a une structure très différente de celle du catalyseur de l'invention, et en particulier il est constitué d'une juxtaposition d'agglomérats en général pratiquement sphériques, dont les diamètres sont en moyenne voisins de 10 micromètres, mais ces agglomérats ne sont pas constitués par un assemblage de plaquettes aciculaires selon l'invention.

Le catalyseur commercialisé par la société française PROCATALYSE sous le nom de HR 306 est un catalyseur d'hydrotraitement classique monomodal microporeux. On s'en est procuré un échantillon que l'on désignera par la suite sous la référence catalyseur C. La courbe de réparatition poreuse de ce catalyseur est représentée figure 1 à coté des courbes correspondant aux catalyseurs A et B. La composition pondérale de ce catalyseur est la saivante:
CoO: 3 %
MoO3: 14 %
Al2O3: 83 %

Les caractéristiques texturales du catalyseur C sont les suivantes:

Granulométrie: extrudés de 1,2 mm
Surface spécifique: 200 $m^2$/g
Volume poreux total: 0,50 $cm^3$/g
Volume poreux en pores de diamètre moyen supérieur à 30 nanomètres: néant

Le catalyseur A, le catalyseur B, et le catalyseur C ont été comparés en effectuant des essias d'hydrotraitement dans les mêmes conditions. La charge d'hydrocarbures était la charge de l'exemple 1, dont les caractéristiques sont rassemblées dans le tableau 2. Les conditions opératoires ont été choisies de façon à accélérer artificiellement trés fortement le phénomène d'empoisonnement par colmatage des bouches de pores. Ces conditions opératoires sont résumées dans le tableau 3. Les essais ont été réalisés dans un réacteur de laboratoire sur 40 $cm^3$ de catalyseur à chaque fois, dans une configuration en lit fixe à courant ascendant.

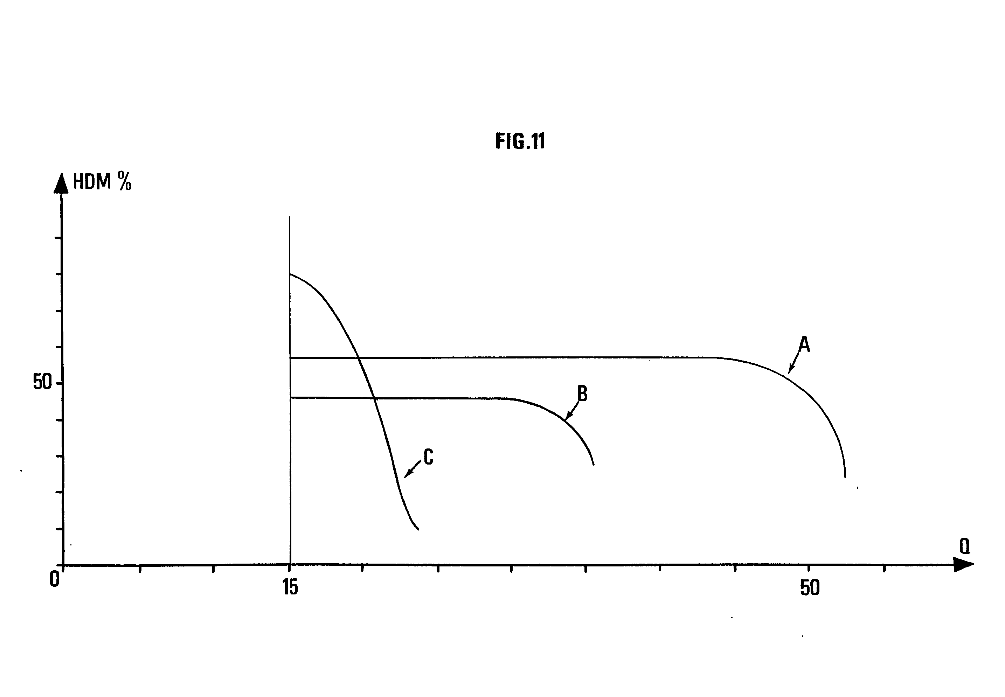

La figure 11 présente les résultats obtenus dans ces essais comparatifs. On a porté sur cette figure en ordonnées le taux d'hydrodémétallation (HDM en %) et en abcisses la quantité (Q) de métaux cumulée retenue par le catalyseur au cours du temps, exprimée en grammes pour 100 grammes de catalyseur frais. Le taux d'hydrodémétallation est HDM = 100 (MO-M)/MO, MO étant la teneur en métaux de la charge initiale et M la teneur en métaux de l'effluent liquide en sortie du réacteur. On définit ici l'activité en hydrodémétallation d'un catalyseur dans des conditions opératoires données comme la valeur de HDM. La quantité de métaux cumulée sur le catalyseur peut être calculée par un bilan matière sur les métaux d'après les valeurs de HDM mesurées à intervalles réguliers, et la valeur de la vitesse spatiale volumique horaire de la charge liquide que l'on impose. Sur la figure 11, les points correspondant aux 192 premières heures de marche à températures variables entre 360 et 420 degrés et V.V.H.= 1 n'ont pas été représentés. Pendant cette première phase de vieilissement sévère, les valeurs de HDM ont été toujours supérieures ou égales à 80 % et

au moins une fois égales à 100% pour chaque catalyseur. A la fin de cette période, la quantité de métaux cumulés était égale à 15 g environ 100 g de chacun des trois catalyseurs.

On peut constater sur la figure 11 que dans ces conditions de vieillissement accéléré le catalyseur A de l'invention a un pouvoir de rétention de l'ordre de 50 % alors que celui du catalyseur B est 32 % et celui du catalyseur C 20 % seulement. Ces pouvoirs de retentions ont étés confirmés par l'analyse chimique des catalyseurs déchargés des réacteurs.

Le catalyseur C ne possédant pas de macroposité présente une forte activité initiale due à sa forte teneur en métaux actifs, mais il s'empoisonne le plus rapidement par colmatage des bouches de pores. Le catalyseur B qui présente une forte porosité et des macropores résiste mieux que le catalyseur C. Le catalyseur A selon l'invention, qui présente sensiblement le même volume poreux, la même surface spécifique que le catalyseur B, et la même distribution du volume des pores de diamètre moyen inférieur à 50 nanomètres, mais qui en diffère en ce qu'il possède l'organisation en oursins selon l'invention, résiste beaucoup mieux à l'empoisonnement par les dépots de métaux. On voit ainsi nettement l'effet surprenant du à la structure suivant l'invention. On démontre aussi par cet exemple comparatif que ni la surface spécifique, ni le volume poreux total, ni la courbe de répartition poreuse dans la domaine des pores de diamètre moyen inférieur à 50 nanomètres ne peuvent être utilisées pour prévoir le pouvoir de rétention d'un catalyseur d'hydrodémétallation des hydrocarbures. La définition de ces propriétés n'est pas caractéristique pour un tel catalyseur.

| Température (deg C) | Vitesse spatiale (1/1/h) | durée du palier (heures) |
|---|---|---|
| 360 | 1 | 48 |
| 380 | 1 | 48 |
| 400 | 1 | 48 |
| 420 | 1 | 48 |
| 400 | 4 | 180 |

Conditions de présulfuration
identiques à celle de l'exemple 1 (tableau 1)
Pression totale: 100 bars
Rapport H2/charge: 1000 $Nm^3/m^3$

Succession de conditions opératoires appliquées pour les essais décrits à l'exemple 6

**Tableau 3**

Densité à 20 degrés C: 1,03 $g/cm^3$
Viscosité à 100 degrés C: 3400 $mm^2/s$
Carbone Conradson: 20,3 % pds
Insolubles au n-heptane: 10,9 % pds
Insolubles au n-pentane: 22,0 % pds
Soufre total: 4,20 % pds
Azote total: 8300 ppm
nickel: 160 ppm
Vanadium: 510 ppm

Caractéristiques de la charge de résidu atmosphérique de pétrole brut lourd vénézuélien utilisée pour le test d'hydrotraitement de l'exemple 7

**Tableau 4**

**Exemple 7**

1 000 $cm^3$ de catalyseur A ont été mis en oeuvre en lit fixe à courant ascendant dans le réacteur d'une unité pilote d'hydrotraitement dans les conditions indiquées à l'exemple 1 mais en fixant la pression totale à 150 bars et la vitesse spatiale volumique horaire à 0,5 l/l/h et pour traiter le résidu atmosphérique d'un pétrole brut lourd du Vénézuéla dont les principales caractéristiques sont mentionées au tableau 4. Cette charge est pour l'homme de l'art nettement plus difficile à traiter que la charge d'huile désasphaltée utilisée pour l'essai de l'exemple 1. En particulier eller contient une proportion très elevée de molécules polvaromatiques condensées du type asphaltènes, mesurée par les indicateurs que sont les valeurs du carbone Conradson et des insolubles à l'heptane et au pentane.

L'essai a duré environ 3000 heures sans que le catalyseur ne présente de désactivation catastrophique: le pouvoir de rétention du catalyseur n'a donc pas été atteint. L'analyse chimique du catalyseur décharge du réacteur a fourni la valeur de 150 grammes de métaux captés pour 100 grammes de catalyseur frais. Les performances movennes du catalyseur nour l'ensemble de l'essai ont été sensiblement les mêmes que celles qui sont indiquées à l'exemple 1, avec de plus un taux de conversion des insolubles à l'heptane normal, ou taux de désaphaltage, égal à 50 %.

**Exemples 8 à 13**

On a rèpété l'exemple 1 en remplaçant à l'étape d'impregnation à sec des billes d'alumine traitées l'heptamolybdate d'ammonium et le nitrate de nickel par respectivement:

a) 40 g d'heptamolybdate d'ammonium.
b) 327 g de sulfate de vanadyle.
c) 822,3 g de nitrate ferrique nonahydrate.
d) 348 g d'heptamolybdate d'ammonium et 243,9 g de nitrate de cobalt hexahydrate.
e) 492,5 g d'acide orthotungstique monohydrate et 255 g de nitrate de nickel hexahydrate.

Les quantités de sels respectives ont à chaque fois été dissoutes dans 4 200 $cm^3$ d'eau distillée exactement. Tous les catalyseures après imprégnation ont été sechés à 110 degrés C puis calcinés deux heures à 350 degrés C puis deux heures à 50 degrés C comme à l'exemple 1.

Ces cinq catalyseurs ont été mis en oeuvre dans le test d'hydrotraitement avec vieillissement accéléré déjà décrit à l'exemple 6, et on a à chaque fois obtenu sensiblement les mêmes performances que pour le catalyseur A telles que présentées figure 11.

On peut donc en conclure que la nature des metaux deposés sur le catalyseur frais n'est pas déterminante de l'activité movenne au delà d'une certaine quantité de métaux captés, ni du pouvoir de rétention ultimé du catalyseur.

**Exemple 14**

On a procédé comme à l'exemple 1 jusqu'à l'obtention des billes d'alumine active traitées et présentant la structure en oursins de l'invention et les caractéristiques texturales déjà decrites.

1000 $cm^3$ de ces billes ont été mises en oeuvre dans le réacteur d'une unité pilote d'hydrotraitment. Aprés purge à l'azote du réacteur, une circulation ascendante d'un mélange gazeux hydrogène/hydrogène sulfure à 2 % volumes d'hydrogène sulfuré a été établie dans le réacteur. Le debit du mélange gazeux a été fixé à 500 Nomaux litres par heure et la pression totale à 100 bars. La charge d'huile désasphaltée extraite de pétrole brut de Boscan dont les caractéristiques sont indiquées au tableau 2 a été admise dans le réacteur calorifugé après préchauffage à 100 degrés C. Cette charge a été introduite en courant ascendant jusqu'à remplir l'espace libre du réacteur et la porosité des billes d'alumine avec un debit de o.5 litres/heure. La température du four de préchouffage a été augmentée à raison de 15 degrés C par heure pour atteindre 390 degrés au bout de 19 heures environ. La température a alors été maintenue au niveau atteint, et l'on a veritié au moven de thermocouples qu'elle était sensiblement uniforme et égale à 390 degrés C dans tout le réacteur. Ces conditions ont été maintenues pendant une période de 240 heures. L'unité pilote a alors été arrétée après rinçage du catalyseur au gas-oil de distillation directe. Une échantillon a été prélevé dans la réacteur et soumis à l'analyse. Les caractéristiques texturales des billes d'alumine ainsi traitées étaient sensiblement identiques a celles du catalyseur A. L'examen au microscope électronique à bajavage a révelé que la structure en oursins de l'invention avait été conservée, et l'analyse chimique a permis de constater qu'elles avaient capté environ 5 grammes de métaux (nickel + vanadium) par 100 grammes de poids initial. Par la suite l'essai a été poursuivi pendant environ 2 500 heures dans des conditions identiques à celles de l'essai de l'exemple 1 et avec des performances sensiblement identiques en tous points. Les 240 heures de prétraitement des billes d'alumines ont donc permis de réaliser un catalyseur semblable au catalyseur A.

**Exemple 15**

L'essai de l'exemple 14 a été reproduit, mais en incorporant a l'huile désasphaltée de brut de Boscan de l'acétyl – acétonate de vanadium de façon à obtenir une teneur en vanadium métal solubilisé dans la charge egale à 850 ppm poids. La période de prétraitement a été limitée à 120 heures, puis l'essai a été poursuivi dans les conditions de l'essai de l'exemple 1 et les performances obtenues ont été sensiblement les même en tout point que celles obtenues lors de l'essais décrit à l'exemple 14. Les billes d'alumine ont donc été transformées en catalyseur par le prétraitement, mais la multiplication par deux de la teneur en métaux solubilisés dans la charge par addition du complexe du vanadium a permis de réduire dans la même proportion la durée du prétraitement destiné à déposer des métaux catalytiques sur les billes d'alumine.

**Revendications**

1) Catalyseur comprenant un support et au moins un métal catalytique our composé de métal catalytique, ledit métal ou au moins un des métaux étant le vanadium, le molybdène, le tungstèn, le nickel, le cobalt et/ou le fer, ledit catalyseur étant caractérisé en ce qu'il est constitué d'une pluralité d'agglomérats juxtaposés formés chacun d'une pluralité de plaquettes aciculaires, les plaquettes de chaque agglomérat étant orientées généralement radialement les unes vis-à-vis des autres et par rapport au centre de l'agglomérat.

2) Catalyseur selon la revendication 1, dans lequel les agglomerats ont une taille moyenne généralement comprise entre 1 et 20 micromètres, les plaquettes aciculaires ayant une longueur moyenne généralement comprise entre 0,05 et 5 micormètres, un rapport de leur longueur moyenne à leur largeur movenne généralement compris entre 2 et 20, un rapport de leur longueur movenne à leur èpaisseur moyenne généralement compris entre 1 et 5000.

3) Catalyseur selon la revendication 1 ou 2, dont le support est l'alumine et dont la surface spécifique est compris entre 50 et 250 $m^2/g$, le volyme poreux total compris entre 0,7 et 2,0 $cm^3/g$ et la répartition poreuse:

– % du volyme poreux total en pores de diamètre moven inférieur à 10 nanomètres: 0–10

– % du volyme poreux total en pores de diamètre moven compris entre 10 et 100 nanomètres: 40–90

– % du volyme poreux total en pores de diamètre moven compris entre 100 et 500 nanomètres: 5–60

– % du volyme poreux total en pores de diamètre moven compris entre 500 et 1000 nanomètres: 5–50

– % du volyme poreux total en pores de diamètre moven supérieur à 1000 nanomètres: 5–20

4) Catalyseur selon l'une quelconque des revendications 1 à 3, dans lequel le support est de l'alumine contenant de 100 à 1000 ppm de silice.

5) Procédé de préparation d'un catalyseur selon l'une quelcongue des revendications 1 à 4, caractérisé en ce qu'il comprend les étapes suivantes:

a) – On traite des agglomérés d'alumine active dans un milieu aqueux constitueé d'un mélange d'au moins un acide permettant de dissoudre au moins une partie de l'alumine des agglomérés et d'au moins un composé apportant un anion capable de se combiner avec les ions aluminium en solution.

b) – On soumet simultanément ou subséquemment les agglomérés ainsi traités à un traitement hydrothermal à une température comprise entre environ 80 degrés C et environ 250 degrés C pendant

une période comprise entre environ quleques minutes et environ 36 heures.

c) – On sèche éventuellement les agglomérés et on les soumet à une activation thermique à une température comprise entre environ 500 degrés C et environ 1100 degrés C.

d) – On introduit au moins un composé de vanadium, molybdène, tungstène, nickel, cobalt, et/ou fer.

6) Procédé de préparation d'un catalyseur selon la revendication 5 caractérisé en ce que l'étape d) est effectuée en imprégnant les agglomérés par une solution aqueuse, organique ou aqua-organique d'au moins un composé de l'un au moins des métaux vanadium, molybdène, tungstène, nickel, cobalt et/ou fer, en séchant ensuite les aggloméres et en les portant à une température d'environ 400 à environ 800 degrés C.

7) Procédé de préparation d'un catalyseur selon la revendication 5 caractérisé en ce que l'étape d) est effectuée en faisant passer sur les agglomérés un mélange d'une charge d'hydrocarbures avec un gaz hydrogénant, ladite charge renfermant à l'état dissous, au moins und composé de l'un au moins des métaux vanadium, molybdène, tungstène, nickel, cobalt et/ou fer, ledit composé étant en concentration x, exprimée en parties pondérales par million par rapport à la charge, ledit gaz hydrogénant renfermant au moins 70 % en volyme d'hydrogène et au moins 0,5 % en volume d'hydrogène sulfuré, ledit passage s'effectuant sous une pression totale comprise entre 80 et 250 bars à une température comprise entre 360 et 420 degrés, avec une vitesse volumique horaire ou V.V.H. comprise entre 0,1 et 2 l/l/heure, et un rapport du débit gazeux au débit liquide compris entre 500 et 2000 normaux litres par litre, pendant une période au moins égale à 50000/x/V.V.H. heures.

8) Utilisation d'un catalyseur selon l'une quelconque des revendications 1 à 4, ou préparé selon l'une quelconque des revendications 5 à 7, dans une réaction d'hydrotraitement d'une charge d'hydrocarbures.

9) Utilisation selon la revendication 8, dans laquelle la charge d'hydrocarbures renferme du vanadium et/ou du nickel et/ou du fer et/ou du titane.

10) Utilisaiton selon la revendication 8, dans laquelle la charge d'hydrocarbures renferme du soufre et/ou de l'azote et/ou de l'oxygène.

**Claims**

1. A catalyst comprising a carrier and at least one catalytic metal or compound of a catalytic metal, said metal or at least one of the metals being vanadium, molybdenum, tungsten, nickel, cobalt and/or iron, said catalyst being characterized in that it consists of a plurality of juxtaposed agglomerates each formed of a plurality of acicular plaquettes, the plaquettes of each agglomerate being oriented generally radially with respect to one another and with respect to the center of the agglomerate.

2. A catalyst according to claim 1, wherein the agglomerates have an average size generally between 1 and 20 micrometers, the acicular plaquettes having an average length generally between 0.05 and 5 micrometers, a ratio of their average length to their average width generally between 2 and 20 and a ratio of their average length to their average thickness generally between 1 and 5000.

3. A catalyst according to claim 1 or 2, whose carrier is alumina, whose specific surface is between 50 and 250 $m^2/g$, whose total pore volume is between 0.7 and 2.0 $cm^3/g$ and whose pore distribution is:
- 0-10 % of the total pore volume as pores of an average diameter lower than 10 nanometers,
- 40-90 % of the total pore volume as pores of an average diameter between 10 and 100 nanometers,
- 5-60 % of the total pore volume as pores of an average diameter between 100 and 500 nanometers,
- 5-50 % of the total pore volume as pores of an average diameter between 500 and 1000 nanometers,
- 5-20 % of the total pore volume as pores of an average diameter greater than 1000 nanometers.

4. A catalyst according to any of claims 1 to 3 wherein the carrier is alumina comprising 100 to 1000 ppm of silica.

5. A process for maufacturing a catalyst according to any of claims 1 to 4, characterized in that it comprises the following steps of:

a) – treating agglomerates of activated alumina in an aqueous medium consisting of a mixture of at least one acid able to dissolve at least one portion of the alumina of the agglomerates and at least one compound providing an anion able to combine with the aluminations in solution,

b) – simultaneously or subsequently subjecting the sotreated agglomerates to a hydrothermal treatment at a temperature between about 80°C and about 250°C for a period of from about a few minutes to about 36 hours,

c) – optionally drying the agglomerates and subjecting them to a thermal activation at a temperature from about 500°C to about 1100°C,

d) – introducing a least on vanadium, molybdenum, tungsten, nickel, cobalt and/or iron compound.

6. A process for manufacturing a catalyst according to claim 5, characterized in that step d) is effected by impregnating the agglomerates with an aqueous, organic or aqueous-organic solution of at least one compound of at least one of the vanadium, molybdenum, tungsten, nickel, cobalt and/or iron metals, drying there after the agglomerates and heating them to about 400 to about 800°C.

7. A process for manufacturing a catalyst according to claim 5, characterized in that step d) is effected by passing a mixture of a hydrocarbon charge with a hydrogenation gas through the agglomerates, said charge comprising, in the dissolved state, at least one compound of at least one of the vanadium, molybdenum, tungsten, nickel, cobalt and/or iron metals said compound being in a concentration x, expressed as parts b.w. per million with respect to the charge, said hydrogenation gas comprising at least 70 % by volume of hydrogen and at least 0.5 % by volume of hydrogen sulfide, said passing step being conducted under a total pressure between 80 and 250 bars at a temperature between 360 and 420°C, at a hourly volumic velocity or V.V.H. between 0.1 and 2 1/1/h and at a ratio of the gas feed rate to the liquid feed

rate between 500 and 2000 N1/1, for a time of at least 50,000/x/V.V.H. hours.

8. The use of a catalyst according to any of claims 1 to 4, or manufactured according to any of claims 5 to 7, in a reaction of hydrotreating a hydrocarbon charge.

9. The use according to claim 8, wherein the hydrocarbon charge comprises vanadium and/or nickel and/or iron and/or titanium.

10. The use according to claim 8, wherein the hydrocarbon charge comprises sulfur and/or nitrogen and/or oxygen.

**Patentansprüche**

1. Katalysator mit einem Träger und wenigstens einem katalytischen Metall oder einer katalytischen Metallverbindung, wobei das Metall oder wenigstens eines der Metalle Vanadium, Molybdän, Wolfram, Nickel, Kobalt und/oder Eisern ist, wobei der Katalysator dadurch gekennzeichnet ist, daß er aus einer Vielzahl von nebeneinander angeordneten Agglomeraten gebildet ist, die jedes aus einer Vielzahl nadelförmiger Plättchen gebildet ist, wobei die Plättchen jedes Agglomerats im wesentlichen radial die einen gegenüber den anderen und bezüglich der Mitte des Agglomerats orientiert sind.

2. Katalysator nach Anspruch 1, dadurch gekennzeichnet, daß die Agglomerate eine mittlere Abmessung aufweisen, die im allgemeinen zwischen 1 und 20 Mikrometer beträgt, wobei die nadel (kristall) förmigen Plättchen eine mittlere Länge aufweisen, die zwischen 0,05 und 5 Mikrometer liegt, ein Verhältnis ihrer mittleren Länge zu ihrer mittleren Breite im allgemeinen zwischen 2 und 20 und ein Verhältnis ihrer mittleren Länge zu ihrer mittleren Dicke von im allgemeinen zwischen 1 und 5000 aufweisen.

3. Katalysator nach einem der Ansprüche 1 oder 2, dessen Träger Aluminiumoxid ist und dessen spezifische Oberfläche zwischen 50 und 250 $m^2/g$ beträgt und dessen Porengesamtvolumen zwischen 0,7 und 2,0 $cm^3/g$ liegt und deren Porenverteilung wie folgt anzugeben ist:
– % des Porengesamtvolumens an Poren mit einem mittleren Durchmesser kleiner 10 Namometer: 0 - 10
– % des Porengesamtvolumens an Poren mit einem mittleren Durchmesser zwischen 10 und 100 Nanometern: 40-90
– % des Porengesamtvolumens an Poren mit einem mittleren Durchmesser zwischen 100 und 500 Nanometern: 5 - 60
– % des Porengesamtvolumens an Poren mit einem mittleren Duchmesser zwischen 500 und 1000 Nanometern: 5 - 50 und
– % des Porengesamtvolumens an Poren mit einem mittleren Durchmesser von mehr als 1000 Nanometern: 5 - 20.

4. Katalysator nach einem der Ansprüche 1 - 3, bei dem der Träger Aluminiumoxid ist, das 100 bis 1000 ppm Siliziumdioxid enthält.

5. Verfahren zum Herstellen eines Katalysators nach einem der Ansprüche 1 - 4, dadurch gekennzeichnet, daß es die folgenden Stufen umfaßt:
a) – man behandelt Agglomerat aktiven Aluminiumoxids in einer wässrigen Umgebung, die gebildet wird aus einem Gemisch wenigstens einer Säure, das es ermöglich, wenigstens einen Teil des Aluminiumoxids der Agglomerate zu lösen, und wenigstens einer Verbindung die ein Anion einführt, welches in der Lage ist, sich mit den in Lösung befindlichen Aluminiumionen zu kombinieren;
b) – man setzt gleichzeitig oder aufeinanderfolgenden die so behandelten Agglomerate einer Hydrothermalbehandlung bei einer Temperatur zwischen etwa 80°C und etwa 250°C während eines Zeitraums aus, der zwischen einigen Minuten etwa und etwa 36 Stunden beträgt;
c) – man trocknet gegebenenfalls die Agglomerate und unterwirft sie einer thermischen Aktivierung bei einer Temperatur zwicschen etwa 500°C und etwa 1100°C; und
d) – man fürht wenigstens eine Vanadium-, Molybdän, Wolfram-, Nickel-, Kobalt- und/oder Eisenverbindung ein.

6. Verfahren zum Herstellen eines Katalysators nach Anspruch 5, dadurch gekennzeichnet, daß die Stufe d) durchgeführt wird, indem die Agglomerate mit einer wässrigen organischen oder aqua-organischen Lösung wenigstens einer Verbindung wenigstens eines der Metalle Vanadium, Molybdän, Wolfram, Nickel, Kobalt und/oder Eisen imprägniert werden, indem man anschließend die Agglomerate trocknet und sie auf eine Temperatur von etwa 400 bis etwa 800°C bringt.

7. Verfahren zum Herstellen eines Katalysators nach Anspruch 5, dadurch gekennzeichnet, daß die Stufe d) durchgeführt wird, indem man über die Agglomerate ein Gemisch einer Charge aus Kohlenwasserstoffen mit einem hydrierenden Gas leitet, wobei die Charge im gelösten Zustand wenigstens eine Verbindung wenigstens eines der Metalle Vanadium, Molybdän, Wolfram, Nickel, Kobalt und/oder Eisen enthält und die Verbindung von der Konzentration x, ausgedrückt in Gewichts-ppm, bezogen auf die Charge vorliegt, das hydrierende Gas wenigstens 70 Volumen-% Wasserstoff und wenigstens 0,5 Volumen-% Schwefelwasserstoff enthält, wobei dieses Darüberleiten unter einem Gesamtdruck zwischen 80 und 250 bar bei einer Temperatur zwischen 360 und 420°C mit einer stündlichen volumentrischen Geschwindigkeit bzw. Volumenschnelle oder V.V.H. zwischen 0,1 und 2 1/1/Stunde und einem Verhältnis von Gasdurchsatz zu Flüssigkeitsdurchsatz zwischen 500 und 2000 Normal-liter pro Liter über einen Zeitraum erfolgt, der wenigstens gleich 50000/x/V.V.H. Stunden beträgt.

8. Verwendung eines Katalysators nach einem der Ansprüche 1 bis 4 oder hergestellt nach einem der Ansprüche 5 bis 7 bei einer Hydrotreatmentreaktion bzw. Wasserstoffbehandlungsreaktion einer Kohlenwasserstoffcharge.

9. Verwendung nach Anspruch 8, wobei die Kohlenwasserstoffcharge Vanadium und/oder Nickel und/oder Eisen und/oder Titan enthält.

10. Verwendung nach Anspruch 8, dadurch gekennzeichnet, daß Kohlenwasserstoffcharge Schwefel und/oder Stickstoff und/oder Sauerstoff enthält.

FIG.1

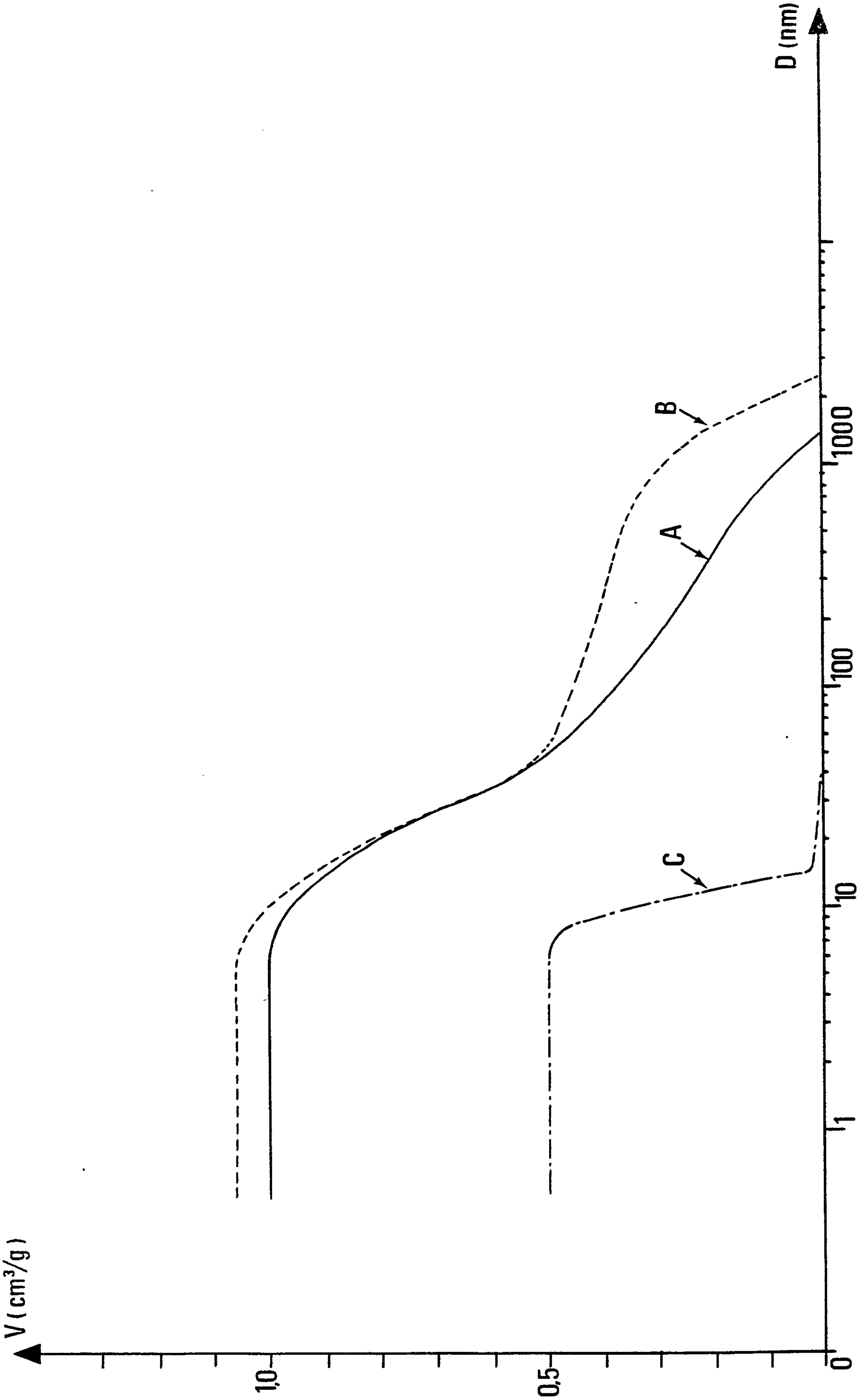

FIG.2
1cm = 33 μm

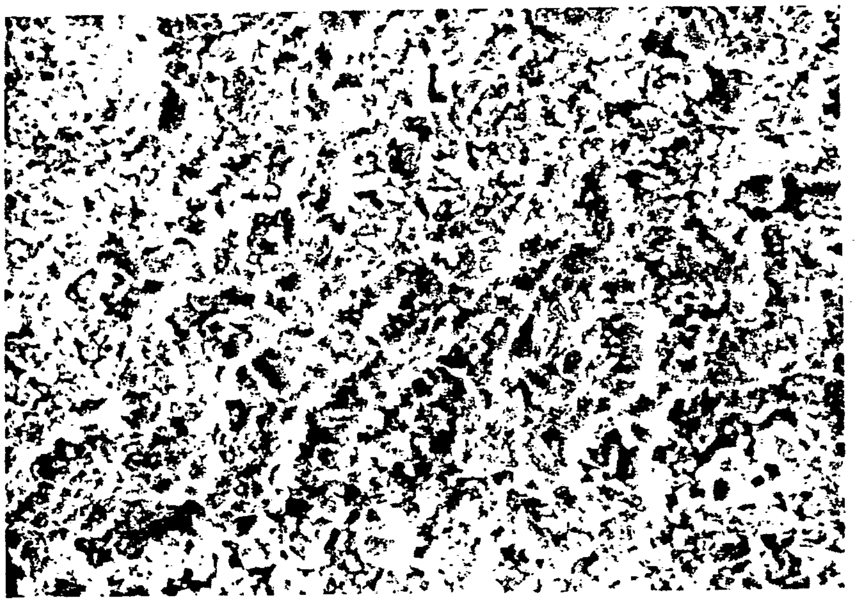

FIG.3
1cm = 3,3μm

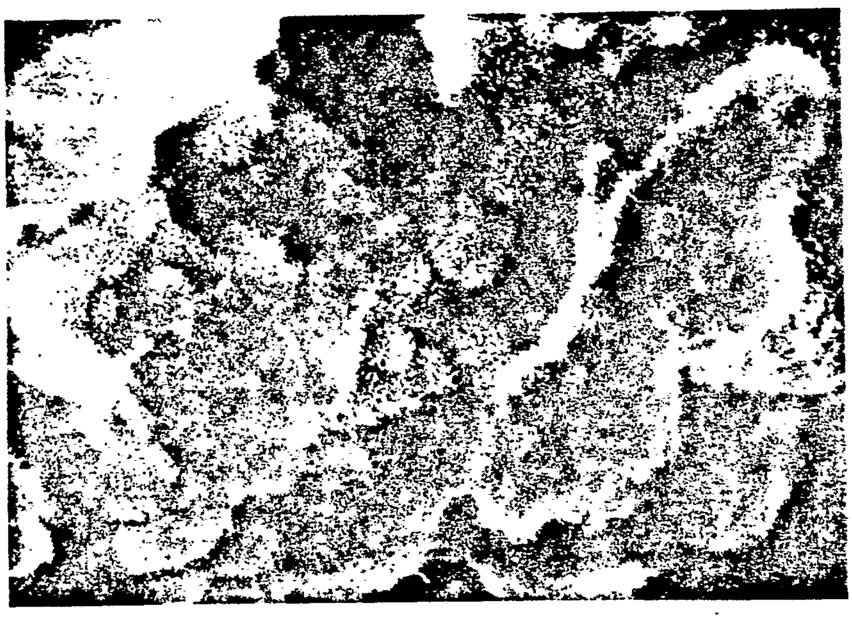

FIG.4
1cm=1 μm

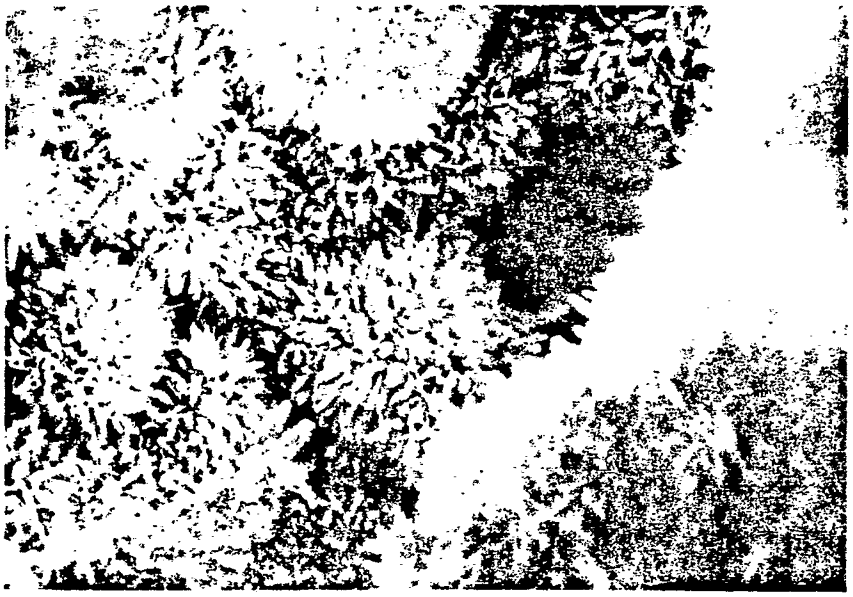

FIG.5
1cm=0,5 μm

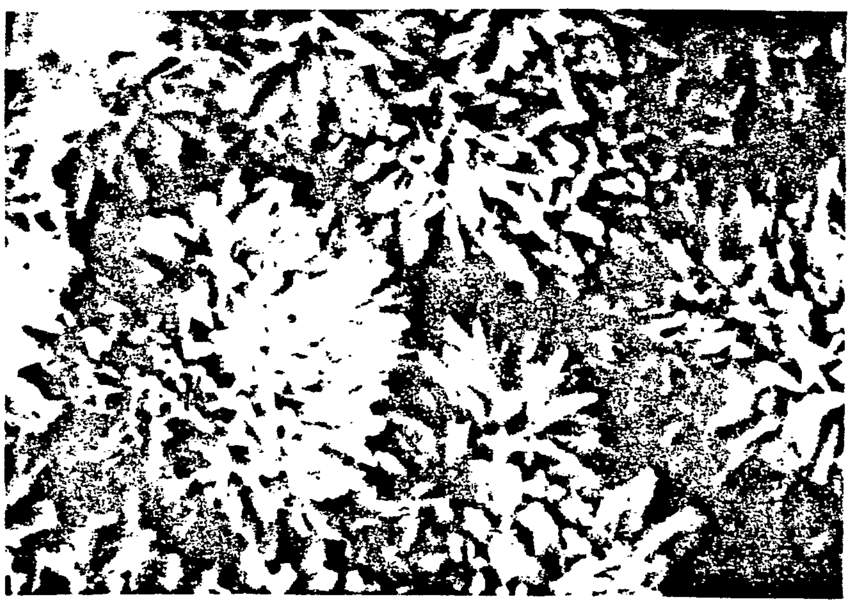

FIG.6

1mm = 9 nanomètres

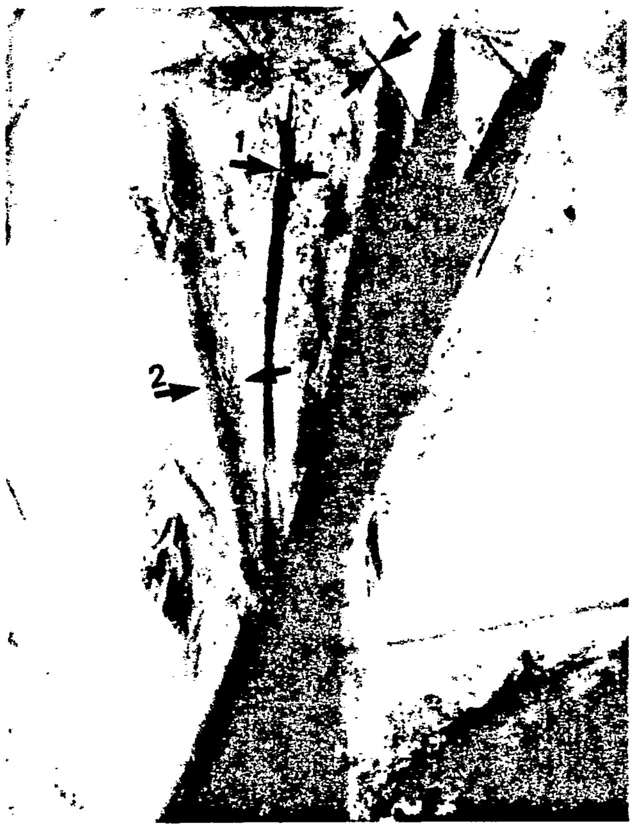

FIG.7

1cm=33 μm

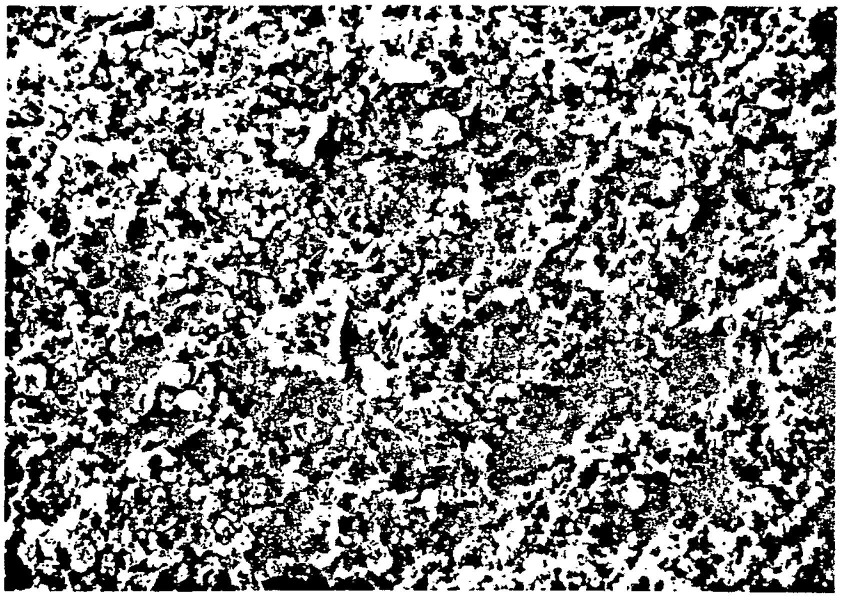

FIG.8

1cm= 3,3 μm

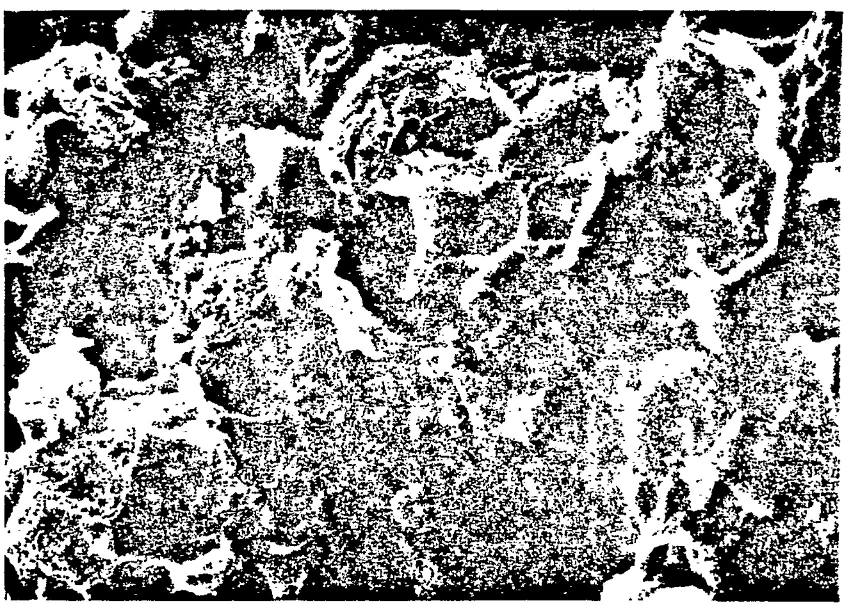

FIG.9
1cm = 1µm

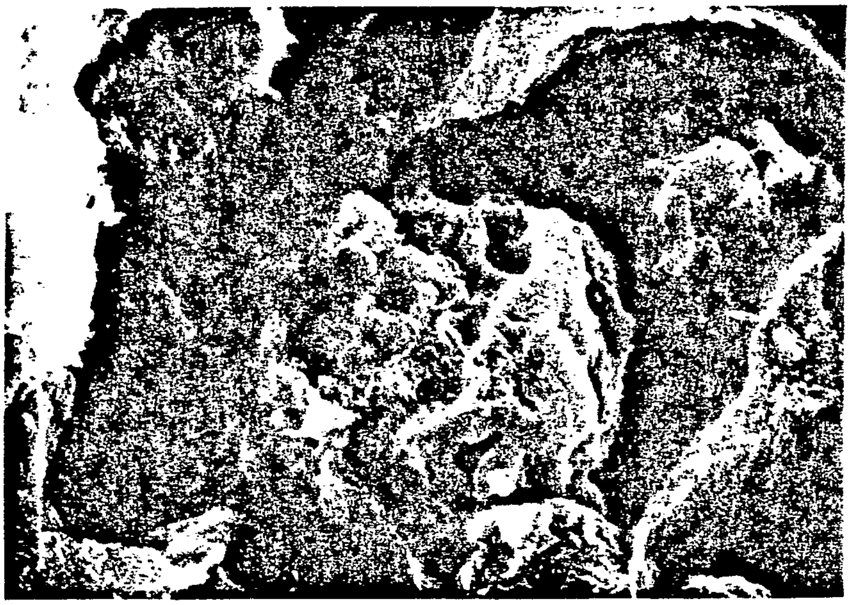

FIG.10
1cm = 0,5 µm

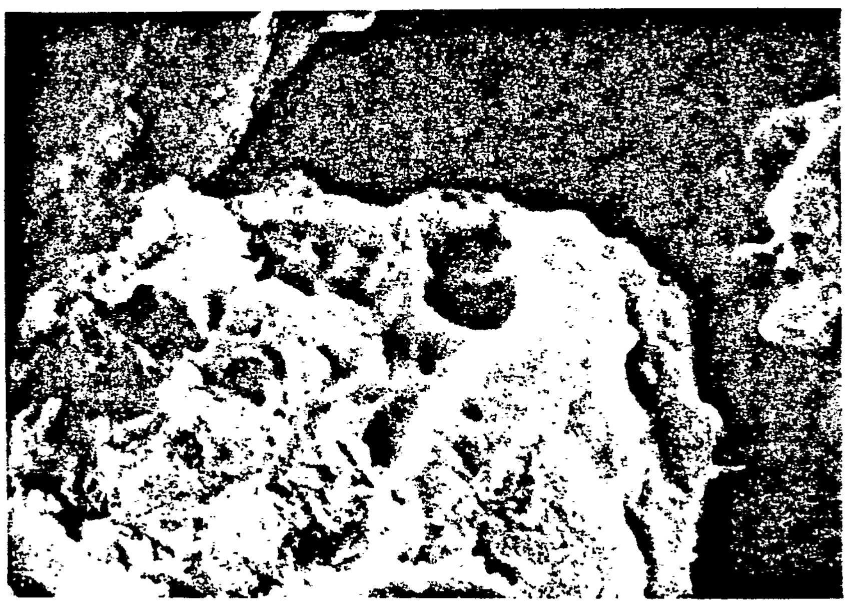

FIG.11